# EUROPÄISCHE PATENTSCHRIFT

(11) **EP 3 047 933 B1**
(45) Veröffentlichungstag und Bekanntmachung des Hinweises auf die Patenterteilung: **29.11.2017**
(21) Anmeldenummer: 15152276.0
(22) Anmeldetag: 23.01.2015
(51) Int. Cl.: B23K 26/00, B23B 47/26, B23K 26/08, B23K 26/36, B23K 26/30, B23Q 11/00, G05B 19/404

(54) **Laserbearbeitungsmaschine mit Gewichtskraftkompensation für eine Laserkomponente und für eine Maschininkomponente**
Laser processing machine with weight compensation for a laser component and a machine component
Machine de traitement au laser à compensation de poids pour un composant laser et pour un composant machine

(43) Veröffentlichungstag der Anmeldung: 27.07.2016
(73) Patentinhaber: Trumpf Laser Marking Systems AG, 7214 Gruesch (CH)
(72) Erfinder: Huyssen, Dieter, 7208 Malans (CH)
(74) Vertreter: Kohler Schmid Möbus Patentanwälte

(56) Entgegenhaltungen:
- JP-A- S5 754 042
- US-A- 4 149 822
- US-A1- 2012 160 816

## Beschreibung

Die Erfindung betrifft eine Laserbearbeitungsmaschine mit einer höhenverfahrbaren Laserkomponente, mit einer weiteren höhenverfahrbaren Maschinenkomponente und mit einer Gewichtskraftkompensation für die mindestens eine Maschinenkomponente, siehe, z.B. US2012/160816 A1. Bekannte Laserbearbeitungsmaschinen (Arbeitsstationen) zum Lasermarkieren von Werkstücken weisen einen Arbeitsraum mit einem höhenverfahrbaren Markierlaser ("höhenverfahrbare Laserkomponente") und einer höhenverfahrbaren Maschinenkomponente in Form einer Schutztür auf, die den Arbeitsraum lichtdicht abschließt. Da das Objektiv des Markierlasers nach unten gerichtet ist, müssen zu markierende Werkstücke entsprechend unter den Markierlaser gelegt werden. Der Fokusabstand zwischen Werkstück und Markierlaser muss relativ genau sein, um eine Markierung bewerkstelligen zu können. Um den Markierlaser auf die Höhe zu bringen, bei der der Fokusabstand stimmt, wird der Markierlaser vertikal relativ zum Werkstück verfahren. Sowohl Schutztür als auch Markierlaser werden in der Mehrzahl der Maschinen motorisch angetrieben, wobei lediglich die Schutztür mit einer herkömmlichen, direkten Gewichtskraftkompensation (Gegengewicht, Gasfeder oder Federzug) ausgestattet ist. Beim Lasermarkieren sind typischerweise keine sehr hohen Verfahrgeschwindigkeiten gefordert, so dass alle Achsen mit verhältnismäßig kleinen Antrieben versehen werden können.

Der vorliegenden Erfindung liegt die Aufgabe zugrunde, bei einer Laserbearbeitungsmaschine der eingangs genannten Art zusätzlich zu der bereits gewichtskompensierten Maschinenkomponente (z.B. Schutztür) auch die höhenverfahrbare Laserkomponente mit einer Gewichtskraftkompensation auszustatten.

Diese Aufgabe wird erfindungsgemäß dadurch gelöst, dass die Gewichtskraftkompensation mindestens ein Rollenpaar mit zwei auf einer gemeinsamen Achse drehfest befestigten Rollen aufweist, wobei die Achse frei drehbar in einer Maschinengestellführung verschiebbar geführt ist, dass die Laserkomponente an der einen, ersten Rolle über ein auf die erste Rolle aufgewickeltes erstes Zugmittel hängend gehalten ist und die Maschinenkomponente an der anderen, zweiten Rolle über ein auf die zweite Rolle aufgewickeltes zweites Zugmittel hängend gehalten ist, wobei die beiden Zugmittel gegenläufig auf die Rollen aufgewickelt sind, und dass an der Achse eine Gegenkrafteinrichtung angreift, die auf die Achse eine Gegenkraft ausübt, welche die von der Laserkomponente und der Maschinenkomponente auf die Achse in Verschieberichtung ausgeübten Kräfte zumindest teilweise, insbesondere vollständig, kompensiert, siehe Anspruch 1. Bei der höhenverfahrbaren Laserkomponente kann es sich um eine, mehrere oder alle laserstrahlerzeugenden oder -führenden Komponenten der Laserbearbeitungsmaschine handeln, also beispielsweise um den gesamten Laser mit Laserresonator und Laserbearbeitungsoptik oder lediglich um die Laserbearbeitungsoptik, die eine Umlenkeinheit und einen Scannereinheit umfassen kann.

Anstatt bei Laserbearbeitungsmaschinen mit zwei unabhängig voneinander höhenbewegten Massen (Laserkomponente und Maschinenkomponente) sowohl für die Laserkomponente als auch für die Maschinenkomponente jeweils eine eigene Gewichtskraftkompensation vorzusehen, sind die Laserkomponente und die Maschinenkomponente erfindungsgemäß in eine einzige (gemeinsame) Gewichtskraftkompensation eingebunden, und zwar ohne Einbau von zusätzliche Kraftaktuatoren (Gegengewichten, Gasfedern, Federzügen, etc.). Erfindungsgemäß lässt sich mithilfe von zwei konzentrisch aneinander befestigten, um ihre Achse frei rotierenden Rollen mit unterschiedlichen Radien, an denen die zwei Zugmittel der Laserkomponente und der Maschinenkomponente aufgewickelt sind, eine Kraftverteilung erreichen, die dem Radiusverhältnis der Rollen entspricht. Die Gewichtskraftkompensation wirkt durch die Achse des Rollenpaars. Wird nun die eine Masse beispielsweise nach oben motorverfahren, wird einerseits die andere Masse durch die Selbsthemmung ihres nichtangetriebenen Motors nicht verfahren, und andererseits wird das Zugmittel der motorverfahrenen Masse von seiner Rolle abgewickelt, während das andere Zugmittel je nach Radius schneller oder langsamer auf seine Rolle aufgewickelt wird. Dadurch bewegt sich das Rollenpaar in seiner Maschinengestellführung gegenläufig zu der motorverfahrenen Masse, aber nicht mit derselben Geschwindigkeit wie die verfahrene Masse. Durch die unterschiedlichen Radien der Rollen entsteht eine Getriebewirkung, die Unterschiede der zu kompensierenden Massen erlaubt und mit einem korrespondierenden Radiusverhältnis auf die unterschiedlichen Massen genau abgestimmt sein kann.

Die gemeinsame Gewichtskraftkompensation ermöglicht den Einsatz von insgesamt kleineren Kraftaktuatoren für die Gewichtskraftkompensation als im Fall von direkten Kompensationsaktuatoren für jede der bewegten Masse einzeln mit jeweils einer ihrem Eigengewicht entsprechenden Gegenkraft. Dies ist möglich, weil das Gewicht der Maschinenkomponente genutzt werden kann, um das Gewicht der höhenverfahrbaren Laserkomponente zu kompensieren.

Bisher werden die vertikalen Bewegungen des Markierlasers mittels Kugelumlaufspindeln bewerkstelligt, die von Schrittmotoren angetrieben sind. Durch die vergleichsweise große Masse des Markierlasers werden entweder große Schrittmotoren bzw. kleine Spindelsteigungen benötigt, um die notwendige Kraft aufzubringen, um die Masse heben zu können. Diese "große" Kraft birgt entsprechend auch Verletzungsgefahr im Fehlerfall und erfordert Sicherheitsvorkehrungen bzw. Überwachungen. Beim Einsatz der erfindungsgemäßen Gewichtskraftkompensation könnten Antriebsketten für die höhenverfahrbare Laserkomponente viel kleiner ausgelegt werden und könnten somit inhärent sicher sein.

Da durch Einsatz der erfindungsgemäßen Gewichtskraftkompensation die benötigte Antriebskraft viel kleiner ist als bei unkompensierten Massen, lassen sich auch mit kleinen Antrieben größere Verfahrgeschwindigkeiten erzielen. Dieser Vorteil ist besonders spürbar bei Laserbearbeitungsmaschinen, bei denen häufig eine Referenzfahrt erfolgen muss. Typischerweise fahren die Markierlaser bei einer Referenzfahrt in die obere Maximalposition und dann zurück auf die Nullstellung, also fast zweimal den gesamten Verfahrbereich. Durch die höhere Geschwindigkeit kann auch Produktionszeit eingespart werden, insbesondere wenn häufige Höhenwechsel des Markierlasers erforderlich sind.

Bei herkömmlichen Laserbearbeitungsmaschinen ist es weder im stromlosen noch im normalen Zustand möglich, den Markierlaser von Hand zu bewegen, da die Haltekräfte sehr groß sein müssen. Durch die erfindungsgemäße Gewichtskraftkompensation ist es möglich, mit kleineren Haltekräften auszukommen, die im Notfall auch von Hand überwunden werden können.

Um ein unbeabsichtigtes Absacken des Markierlasers zu verhindern, sind die Schrittmoren typischerweise mit Wellenbremsen ausgestattet, die im stromlosen Zustand anziehen, da die Gewichtskraft des Markierlasers zu groß ist, als dass die Selbsthemmung der Spindel und des Motors im stromlosen Zustand ein Absacken verhindern. Die erfindungsgemäße Gewichtskraftkompensation der höhenverfahrbaren Laserkomponente kann eine solche Bremse überflüssig machen. Wie oben erwähnt, können vor allem die Antriebsaktuatoren kleiner ausgelegt werden, weil nur noch Trägheitskräfte und kaum Gewichtskräfte überwunden werden müssen.

Da die erfindungsgemäße Gewichtskraftkompensation kaum Netto-Energie benötigt, wird für die Höhenbewegungen weniger Energie verbraucht. Hinzu kommt, dass der Haltestrom des Höhenantriebs geringer sein kann als im unkompensierten Fall, zumal der Haltestrom typischerweise permanent anliegt, wenn die Laserbearbeitungsmaschine eingeschaltet ist.

Zu beachten ist, dass die Erfindung nicht geeignet ist für Anwendungen mit Dynamik, da dynamische Kräfte von dem einen System auf das andere übertragen werden und sich die Systeme somit gegenseitig beeinflussen. In den meisten Anwendungen für Laserbearbeitungsmaschinen sind weder nennenswerte Dynamik noch Gleichzeitigkeit bei den Bewegungen gefordert; insofern ist eine Eliminierung der dynamischen Effekte mittels Haltestrom, Wellenbremsen oder Spindelreibung der Motoren gut realisierbar.

Vorzugsweise sind die Radien der Rollen und die Gegenkraft der Gegenkrafteinrichtung derart gewählt, dass im Ruhezustand auf die Achse kein Drehmoment und keine Kraft in Verschieberichtung wirken, also dass sich sowohl die auf die Achse wirkenden Drehmomente von Laserkomponente und Maschinenkomponente als auch die auf die Achse in Verschieberichtung wirkenden Kräfte von Laserkomponente, Maschinenkomponente und Gegenkrafteinrichtung kompensieren.

Bevorzugt sind das erste Zugmittel und/oder das zweite Zugmittel über Umlenkrollen derart umgelenkt, dass die Gewichtskraft der Laserkomponente und die Gewichtskraft der Maschinenkomponente an der Achse einander entgegengesetzt oder gleichgerichtet angreifen. Im ersten Fall kompensieren sich die Gewichtskraft der Laserkomponente und die Gewichtskraft der Maschinenkomponente an der Achse bereits teilweise, so dass das Gegengewicht nur die Differenz der Gewichtskräfte von Laserkomponente und Maschinenkomponente kompensieren muss. Im zweiten Fall addieren sich die Gewichtskräfte von Laserkomponente und Maschinenkomponente an der Achse, so dass das Gegengewicht die Summe der Gewichtskräfte von Laserkomponente und Maschinenkomponente kompensieren muss. Die Richtung der Gewichtskräfte von Laserkomponente und Maschinenkomponente kann je nach Anforderung der Maschine oder Einbausituation durch Umlenkung frei gewählt werden.

Die Gegenkrafteinrichtung kann durch ein Gegengewicht gebildet sein, das - ggf. über eine oder mehrere Umlenkrollen - an der Achse hängend gehalten ist, oder durch eine Gasfeder oder einen Federzug, die bzw. der an der Achse angreift und eine möglichst konstant bleibende Gegenkraft ausübt. Beim Einsatz einer Gasfeder oder eines Federzugs (z.B. Zugfeder oder Federseilrolle) ist die Wirkrichtung der Gegenkraft frei wählbar, so dass beispielsweise auch ein Einbau der Gewichtskraftkompensation in horizontaler Lage oberhalb des Arbeitsraumes möglich ist.

Die Maschinengestellführung kann vertikal, schräg oder horizontal verlaufen, wobei im letzteren Fall ein Gegengewicht über eine Umlenkrolle an der Rollenachse angreifen kann.

Die Erfindung eignet sich besonders für Lasermarkierungsmaschinen mit einem Markierlaser, aber auch für alle anderen Laserbearbeitungsmaschinen mit einer höhenverfahrbaren Laserkomponente. Laserbearbeitungsmaschinen sind insofern gut geeignet, da keine nennenswerten Prozesskräfte auf die gewichtskompensierten Massen einwirken, welche die Balance des Systems gefährden könnten (wie es beispielsweise bei spanabhebenden Maschinen der Fall ist).

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung. Die Figuren der Zeichnung zeigen den erfindungsgemäßen Gegenstand stark schematisiert und sind nicht maßstäblich zu verstehen.

Es zeigen:
- Fig. 1: eine erfindungsgemäße Laserbearbeitungsmaschine in einer perspektivischen Ansicht;
- Fig. 2: schematisch die bei der in Fig. 1 gezeigten Laserbearbeitungsmaschine wirkenden Kräfte; und
- Fig. 3: schematisch die bei einer gegenüber Fig. 1 modifizierten erfindungsgemäßen Laserbearbeitungsmaschine wirkenden Kräfte.

In der folgenden Beschreibung der Zeichnung werden für gleiche bzw. funktionsgleiche Bauteile identische Bezugszeichen verwendet.

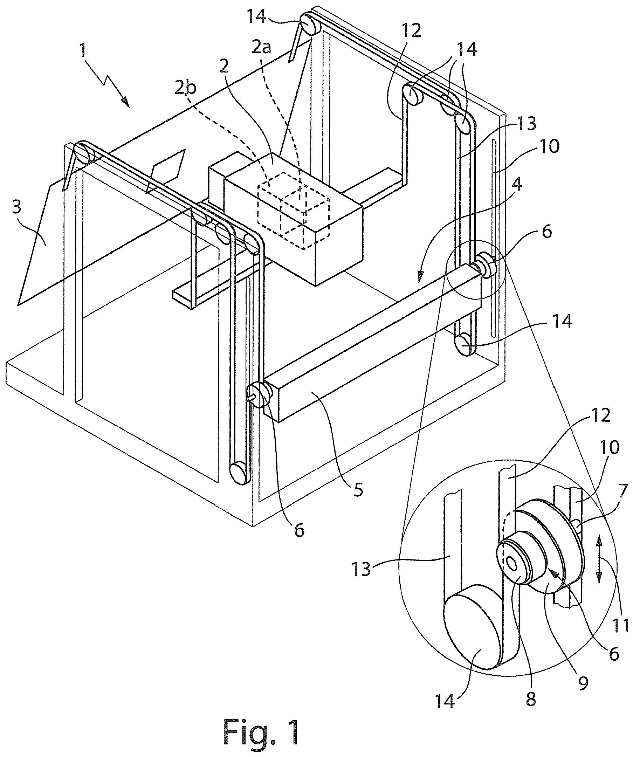

Die in **Fig. 1** gezeigte Laserbearbeitungsmaschine **1** ist eine Markierlaser-Arbeitsstation mit einem höhenverfahrbaren Markierlaser **2,** einer höhenverfahrbaren Schutztür **3** und einer gemeinsamen Gewichtskraftkompensation **4** für Markierlaser 2 und Schutztür 3. Das Gewicht **m**_{L} des Markierlasers 2 ist typischerweise ca. doppelt so groß wie das Gewicht **m**_{T} der Schutztür 3. Der Übersichtlichkeit halber sind Antriebselemente (Motoren, Spindeln) und Führungen des Markierlasers 2 und der Schutztür 3 nicht gezeigt.

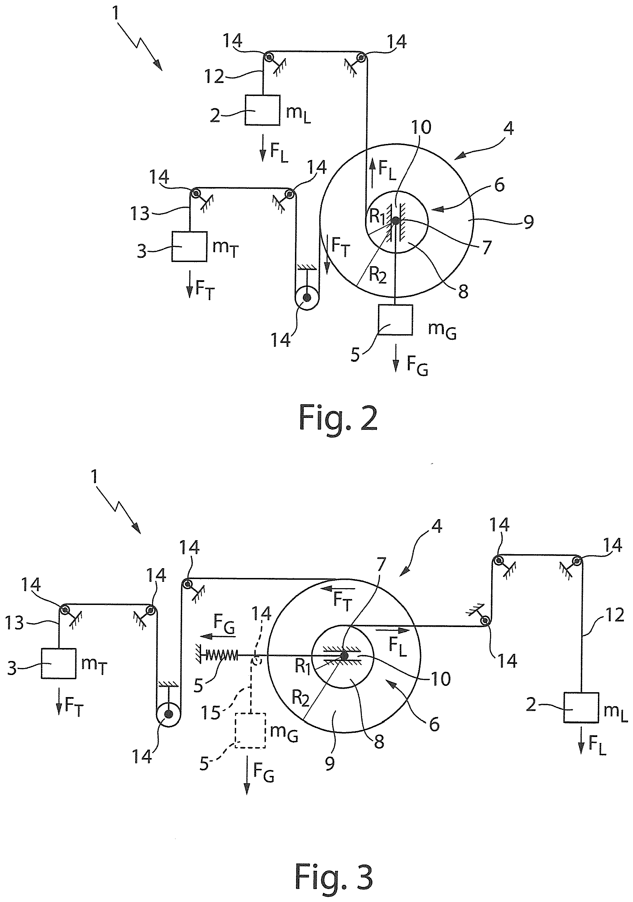

Wie in **Fig. 2** schematisch gezeigt, umfasst die Gewichtskraftkompensation 4 eine Gegenkrafteinrichtung **5** in Form eines Gegengewichts **m**_{G} und zwei Rollenpaare **6,** die beidseitg am Gegengewicht m_{G} drehbar befestigt sind. Jedes Rollenpaar 6 umfasst zwei auf einer gemeinsamen Achse **7** drehfest befestigte Rollen **8, 9** mit unterschiedlichen Radien **R₁**, **R₂**, wobei die Achse 7 frei drehbar in einer vertikalen Maschinengestellführung **10** verschiebbar (Verschieberichtung **11**) geführt ist. Der Markierlaser 2 ist an den kleineren Rollen 8 jeweils über ein auf diese Rolle 8 aufgewickeltes erstes Zugmittel **12** hängend gehalten, und die Schutztür 3 ist an den größeren Rollen 9 jeweils über ein auf diese Rolle 9 aufgewickeltes zweites Zugmittel **13** hängend gehalten. Die beiden Zugmittel 12, 13 sind gegenläufig auf die Rollen 8, 9 aufgewickelt und können als Seile, Riemen oder Ketten ausgebildet sein. Über Umlenkrollen **14** sind die beiden Zugmittel 12, 13 derart umgelenkt, dass an der Achse 7 die Gewichtskraft **F**_{L} des Markierlasers 2 nach oben und die Gewichtskraft **F**_{T} der Schutztür 3 nach unten wirkt. Das an der Achse 7 hängend gehaltene Gegengewicht m_{G} übt auf die Achse 7 eine nach unten gerichtete Gegenkraft **F**_{G} aus, welche im Ruhezustand die von Markierlaser 2 und Schutztür 3 auf die Achse 7 in Verschieberichtung 11 ausgeübten Gewichtskräfte vollständig kompensiert, also F_{G} = F_{L} - F_{T}. Die Radien R₁, R₂ der Rollen 8, 9 sind derart gewählt, dass im Ruhezustand auf die Achse 7 kein Drehmoment wirkt, also R₁ x F_{L} = R₂ x F_{T}. Im dargestellten Ausführungsbeispiel ist der Markierlaser 2 doppelt so schwer wie die Schutztür 3, so dass das Zugmittel 12 des Markierlasers 2 auf die kleinere Rolle 8 aufgewickelt ist und das Verhältnis der Rollenradien R₁:R₂ ca. 1:2 beträgt.

Die Funktionsweise der Gewichtskraftkompensation 4 ist wie folgt:
Im Ruhezustand wirkt auf die Achse 7 weder ein Drehmoment noch eine Kraft in Verschieberichtung 11, so dass sich das Rollenpaar 6 weder dreht noch in Verschieberichtung bewegt und der Markierlaser 2 und die Schutztür 3 gewichtskompensiert sind.

Wird der Markierlaser 2 über seinen Antriebsmotor in der Höhe verfahren, z.B. abgesenkt, bleibt die Schutztür 3 durch die Selbsthemmung ihres nichtangetriebenen Motors in der Höhe festgestellt. Durch Absenken des Markierlasers 2 wird das erste Zugmittel 12 auf seine Rolle 8 aufgewickelt und das zweite Zugmittel 13 von seiner Rolle 9 abgewickelt, wobei das erste Zugmittel 12 aufgrund des kleineren Radius R₁ seiner Rolle 8 schneller aufgewickelt wird als das zweite Zugmittel 13 von seiner Rolle 9 abgewickelt wird. Dadurch bewegt sich das Rollenpaar 6 in der Maschinengestellführung 10 nach oben, also gegenläufig zum abgesenkten Markierlaser 2 und mit doppelter Geschwindigkeit wie der abgesenkte Markierlaser 2.

Wird der Markierlaser 2 über seinen Antriebsmotor angehoben, bleibt die Schutztür 3 durch die Selbsthemmung ihres nichtangetriebenen Motors in der Höhe festgestellt. Durch Anheben des Markierlasers 2 wird das erste Zugmittel 12 von seiner Rolle 8 abgewickelt und das zweite Zugmittel 13 auf seine Rolle 9 aufgewickelt, wobei das erste Zugmittel 12 aufgrund des kleineren Radius R₁ seiner Rolle 8 schneller abgewickelt wird als das zweite Zugmittel 13 auf seine Rolle 9 aufgewickelt wird. Dadurch bewegt sich das Rollenpaar 6 in der Maschinengestellführung 10 nach unten, also gegenläufig zum angehobenen Markierlaser 2 und mit doppelter Geschwindigkeit wie der angehobene Markierlaser 2.

Da während des Ansenkens oder Anhebens des Markierlasers 2 auf die Achse 7 lediglich eine Verschiebekraft nach oben bzw. nach unten wirkt, bleibt der sich bewegende Markierlaser 2 über die Schutztür 3 und das Gegengewicht mg weiterhin gewichtskompensiert.

Wird die Schutztür 3 über ihren Antriebsmotor in der Höhe verfahren, z.B. abgesenkt, bleibt der Markierlaser 2 durch die Selbsthemmung seines nichtangetriebenen Motors in der Höhe festgestellt. Durch Absenken der Schutztür 3 wird das zweite Zugmittel 13 von seiner Rolle 9 abgewickelt und das erste Zugmittel 12 auf seine Rolle 8 aufgewickelt, wobei das zweite Zugmittel 13 aufgrund des größeren Radius R₂ seiner Rolle 9 langsamer abgewickelt wird als das erste Zugmittel 12 auf seine Rolle 8 aufgewickelt wird. Dadurch bewegt sich das Rollenpaar 6 in der Maschinengestellführung 10 nach oben, also gegenläufig zur abgesenkten Schutztür 3 und mit doppelter Geschwindigkeit wie die abgesenkte Schutztür 3.

Wird die Schutztür 3 über ihren Antriebsmotor angehoben, bleibt der Markierlaser 2 durch die Selbsthemmung seines nichtangetriebenen Motors in der Höhe festgestellt. Durch Anheben der Schutztür 3 wird das zweite Zugmittel 13 auf seine Rolle 9 aufgewickelt und das erste Zugmittel 12 von seiner Rolle 8 abgewickelt, wobei das zweite Zugmittel 13 aufgrund des größeren Radius R₂ seiner Rolle 9 langsamer aufgewickelt wird als das erste Zugmittel 12 von seiner Rolle 8 abgewickelt wird. Dadurch bewegt sich das Rollenpaar 6 in der Maschinengestellführung 10 nach unten, also gegenläufig zur angehobenen Schutztür 3 und langsamer wie die angehobene Schutztür 3, wobei die potentielle Energie des Systems Schutztür 3 und Gegenkrafteinrichtung 5 immer gleich bleibt.

Da während des Ansenkens oder Anhebens der Schutztür 3 auf die Achse 7 lediglich eine Verschiebekraft nach oben bzw. nach unten wirkt, bleibt die sich bewegende Schutztür 3 über den Markierlaser 2 und das Gegengewicht m_{g} weiterhin gewichtskompensiert.

Im Unterschied zur Fig. 2 ist bei der in **Fig. 3** gezeigten Laserbearbeitungsmaschine 1 lediglich die Maschinengestellführung 10 horizontal ausgerichtet und die Gegenkrafteinrichtung 5 durch einen Federzug ausgebildet, der mit der Gegenkraft F_{G} an der Achse 7 angreift. Der Federzug kann beispielsweise als Zug- oder Gasfeder, wie in Fig. 3 angedeutet, oder als eine gegen Abwickeln vorgespannte Federseilrolle ausgebildet sein. Wie gestrichelt dargestellt, kann die Gegenkrafteinrichtung 5 auch ein Gegengewicht m_{G} sein, das über ein an einer Umlenkrolle 14 umgelenktes Zugmittel **15** an der Achse 7 hängend gehalten ist.

Statt vertikal wie in Fign. 1 und 2 oder horizontal wie in Fig. 3 kann die Maschinengestellführung 10 auch schräg ausgerichtet sein.

Anders als bei den Ausführungsformen der Fign. 1 bis 3, bei denen der gesamte Markierungslaser 2 mit Laserresonator **2a** und Bearbeitungsoptik **2b** höhenverfahrbar ist, kann bei anderen nichtgezeigten Ausführungsformen nur die Bearbeitungsoptik 2b höhenverfahrbar sein, während der Laserresonator 2a stationär innerhalb oder außerhalb der Laserbearbeitungsmaschine angeordnet ist. So kann beispielsweise im Falle eines Faserlasers nur die Bearbeitungsoptik mit Umlenkeinheit höhenverfahrbar sein und das Laserlicht vom stationären Laserresonator mittels eines Laserlichtkabels zur Bearbeitungsoptik geführt werden.

## Patentansprüche

1. Laserbearbeitungsmaschine (1) mit einer höhenverfahrbaren Laserkomponente (2, 2a, 2b), mit einer höhenverfahrbaren Maschinenkomponente (3) und mit einer Gewichtskraftkompensation (4) für die mindestens eine Maschinenkomponente (3),
**dadurch gekennzeichnet,**
**dass** die Gewichtskraftkompensation (4) mindestens ein Rollenpaar (6) mit zwei auf einer gemeinsamen Achse (7) drehfest befestigten Rollen (8, 9) aufweist, wobei die Achse (7) frei drehbar in einer Maschinengestellführung (10) verschiebbar geführt ist,
**dass** die Laserkomponente (2, 2a, 2b) an der einen, ersten Rolle (8) über ein auf die erste Rolle (8) aufgewickeltes erstes Zugmittel (12) hängend gehalten ist und die Maschinenkomponente (3) an der anderen, zweiten Rolle (9) über ein auf die zweite Rolle (9) aufgewickeltes zweites Zugmittel (13) hängend gehalten ist, wobei die beiden Zugmittel (12, 13) gegenläufig auf die Rollen (8, 9) aufgewickelt sind, und
**dass** an der Achse (7) eine Gegenkrafteinrichtung (5) angreift, die auf die Achse (7) eine Gegenkraft (F_{G}) ausübt, welche die von der Laserkomponente (2, 2a, 2b) und der Maschinenkomponente (3) auf die Achse (7) in Verschieberichtung (11) ausgeübten Kräfte (F_{L}, F_{T}) zumindest teilweise, insbesondere vollständig, kompensiert.

2. Laserbearbeitungsmaschine nach Anspruch 1, **dadurch gekennzeichnet, dass** die Radien (R₁, R₂) der Rollen (8, 9) und die Gegenkraft (F_{G}) der Gegenkrafteinrichtung (5) derart gewählt sind, dass im Ruhezustand auf die Achse (7) kein Drehmoment und keine Kraft in Verschieberichtung (11) wirkt.

3. Laserbearbeitungsmaschine nach Anspruch 1 oder 2, **dadurch gekennzeichnet, dass** das erste Zugmittel (12) und/oder das zweite Zugmittel (13) über Umlenkrollen (14) umgelenkt sind, wobei die Gewichtskraft (F_{L}) der Laserkomponente (2, 2a, 2b) und die Gewichtskraft (F_{T}) der Maschinenkomponente (3) an der Achse (7) einander entgegengesetzt oder gleichgerichtet angreifen.

4. Laserbearbeitungsmaschine nach einem der vorhergehenden Ansprüche, **dadurch gekennzeichnet, dass** die Gegenkrafteinrichtung (5) durch ein Gegengewicht (m_{G}) gebildet ist, das an der Achse (7) hängend gehalten ist.

5. Laserbearbeitungsmaschine nach Anspruch 4, **dadurch gekennzeichnet, dass** die Gewichtskraftkompensation (4) zwei beidseitg am Gegengewicht (m_{G}) drehbar gelagerte Rollenpaare (6) aufweist, deren Achsen (7) jeweils frei drehbar in Maschinengestellführungen (10) verschiebbar geführt sind.

6. Laserbearbeitungsmaschine nach einem der Ansprüche 1 bis 3, **dadurch gekennzeichnet, dass** die Gegenkrafteinrichtung (5) durch eine Gasfeder oder einen Federzug gebildet ist, die bzw. der an der Achse (7) angreift.

7. Laserbearbeitungsmaschine nach einem der vorhergehenden Ansprüche, **dadurch gekennzeichnet, dass** die Maschinengestellführung (10) vertikal, horizontal oder schräg ausgerichtet ist.

8. Laserbearbeitungsmaschine nach einem der vorhergehenden Ansprüche, **dadurch gekennzeichnet, dass** die beiden Zugmittel (12, 13) als Seil, Riemen oder Kette ausgebildet sind.

9. Laserbearbeitungsmaschine nach einem der vorhergehenden Ansprüche, **dadurch gekennzeichnet, dass** die höhenverfahrbare Laserkomponente eine Laserbearbeitungsoptik (2b) umfasst.

10. Laserbearbeitungsmaschine nach Anspruch 9, **dadurch gekennzeichnet, dass** die Laserbearbeitungsoptik (2b) eine Umlenkeinheit und einen Scannereinheit umfasst.

11. Laserbearbeitungsmaschine nach Anspruch 9 oder 10, **dadurch gekennzeichnet, dass** die höhenverfahrbare Laserkomponente zusätzlich einen Laserresonator (2a) umfasst.

## Claims

1. Laser processing machine (1) comprising a height-adjustable laser component (2, 2a, 2b), a height-adjustable machine component (3) and a weight compensation (4) for the at least one machine component (3),
**characterised in that**
the weight compensation (4) comprises at least one pair of rollers (6) with two rollers (8, 9) fastened on a common axle (7) in a rotatably fixed manner, wherein the axle (7) is designed to rotate freely and slide in a machine frame guide (10),
that the laser component (2, 2a, 2b) is held suspended on the one first roller (8) by means of a first traction means (12) wound onto the first roller (8) and the machine component (3) is held suspended on the other second roller (9) by means of a second traction means (13) wound onto the second roller (9), wherein both traction means (12, 13) are wound in reverse directions onto rollers (8, 9), and
that a counterweight device (5) acts on the axle (7) by exerting a counterforce (F_{G}) on the axle (7), which compensates at least partially, in particular completely the forces (F_{L}, F_{T}) exerted by the laser component (2, 2a, 2b) and the machine component (3) on the axle (7) in the sliding direction (11).

2. Laser processing machine according to claim 1, **characterised in that** the radii (R₁, R₂) of the rollers (8, 9) and the counterforce (F_{G}) of the counterweight device (5) are selected such that, in the idle state, there is no torque is applied to the axle (7) and no force is applied in the sliding direction (11) to the axle (7).

3. Laser processing machine according to claim 1 or 2, **characterised in that** the first traction means (12) and/or the second traction means (13) is/are deflected by deflection pulleys (14), wherein the weight (F_{L}) of the laser component (2, 2a, 2b) and the weight (F_{T}) of the machine component (3) act on the axle (7) in opposite directions or in the same direction.

4. Laser processing machine according to one of the preceding claims, **characterised in that** the counterweight device (5) is formed by a counterweight (m_{G}) which is held suspended on the axle (7).

5. Laser processing machine according to claim 4, **characterised in that** the weight compensation (4) has two pairs of rollers (6) rotatably mounted on both sides of the counterweight (m_{G}), the axles (7) of each of said pair of rollers being designed to rotate freely and slide in machine frame guides (10).

6. Laser processing machine according to one of the claims 1 to 3, **characterised in that** the counterweight device (5) is formed by a gas spring or a spring balancer which engages the axle (7).

7. Laser processing machine according to one of the preceding claims, **characterised in that** the machine frame guide (10) is aligned vertically, horizontally or obliquely.

8. Laser processing machine according to one of the preceding claims, **characterised in that** both traction means (12, 13) are formed as a cable, belt or chain.

9. Laser processing machine according to one of the preceding claims, **characterised in that** the height-adjustable laser component comprises a laser processing optical system (2b).

10. Laser processing machine according to claim 9, **characterised in that** the laser processing optical system (2b) comprises a deflecting unit and a scanner unit.

11. Laser processing machine according to claim 9 or 10, **characterised in that** additionally the height-adjustable laser component additionally comprises a laser resonator (2a).

## Revendications

1. Machine d'usinage au laser (1) dotée d'un composant laser (2, 2a, 2b) déplaçable en hauteur, d'un composant de machine (3) déplaçable en hauteur et d'une compensation de poids (4) pour ledit au moins un composant de machine (3),
**caractérisée en ce**
**que** la compensation de poids (4) comporte au moins une paire de poulies (6) avec deux poulies (8, 9) fixées de manière solidaire en rotation sur un axe (7) commun, l'axe (7) étant guidé de manière à pouvoir coulisser et tourner librement dans un guide de châssis de machine (10),
**que** le composant laser (2, 2a, 2b) est maintenu suspendu à la première poulie (8) par l'intermédiaire d'un premier moyen de traction (12) enroulé sur la première poulie (8) et le composant de machine (3) est maintenu suspendu à l'autre, deuxième poulie (9) par l'intermédiaire d'un deuxième moyen de traction (13) enroulé sur la deuxième poulie (9), les deux moyens de traction (12, 13) étant enroulés en sens contraires sur les poulies (8, 9), et
**qu'**un dispositif de force antagoniste (5) agit sur l'axe (7), lequel exerce sur l'axe (7) une force antagoniste (F_{G}) qui compense au moins partiellement, en particulier complètement les forces (F_{L}, F_{T}) exercées dans la direction de coulissement (11) sur l'axe (7) par le composant laser (2, 2a, 2b) et le composant de machine (3).

2. Machine d'usinage au laser selon la revendication 1, **caractérisée en ce que** les rayons (R₁, R₂) des poulies (8, 9) et la force antagoniste (F_{G}) du dispositif de force antagoniste (5) sont choisis de telle sorte que, au repos, aucun couple et aucune force dans la direction de coulissement (11) n'agisse sur l'axe (7).

3. Machine d'usinage au laser selon la revendication 1 ou 2, **caractérisée en ce que** le premier moyen de traction (12) et/ou le deuxième moyen de traction (13) sont déviés par des poulies de renvoi (14), le poids (F_{L}) du composant laser (2, 2a, 2b) et le poids (F_{T}) du composant de machine (3) agissant sur l'axe (7) en sens opposés ou dans le même sens.

4. Machine d'usinage au laser selon l'une des revendications précédentes, **caractérisée en ce que** le dispositif de force antagoniste (5) est formé par un contrepoids (m_{G}) qui est maintenu suspendu à l'axe (7).

5. Machine d'usinage au laser selon la revendication 4, **caractérisée en ce que** la compensation de poids (4) comporte deux paires de poulies (6) montées tournantes des deux côtés du contrepoids (m_{G}), dont les axes (7) sont chaque fois guidés de manière à pouvoir coulisser et tourner librement dans des guides de châssis de machine (10).

6. Machine d'usinage au laser selon l'une des revendications 1 à 3, **caractérisée en ce que** le dispositif de force antagoniste (5) est formé par un ressort à gaz ou un équilibreur à ressort qui agit sur l'axe (7).

7. Machine d'usinage au laser selon l'une des revendications précédentes, **caractérisée en ce que** le guide de châssis de machine (10) est orienté verticalement, horizontalement ou obliquement.

8. Machine d'usinage au laser selon l'une des revendications précédentes, **caractérisée en ce que** les deux moyens de traction (12, 13) sont réalisés sous la forme d'un câble, d'une courroie ou d'une chaîne.

9. Machine d'usinage au laser selon l'une des revendications précédentes, **caractérisée en ce que** le composant laser déplaçable en hauteur comprend une optique d'usinage au laser (2b).

10. Machine d'usinage au laser selon la revendication 9, **caractérisée en ce que** l'optique d'usinage au laser (2b) comprend une unité de déviation et une unité de balayage.

11. Machine d'usinage au laser selon la revendication 9 ou 10, **caractérisée en ce que** le composant laser déplaçable en hauteur comprend en outre un résonateur laser (2a).
